# EUROPEAN PATENT APPLICATION

(11) **EP 3 116 208 A1**
(43) Date of publication of application: **11.01.2017**
(21) Application number: 15306129.6
(22) Date of filing: 09.07.2015
(51) Int. Cl.: H04M 15/00, H04L 12/14

(54) **MULTIPLE DESTINATIONS INFORMATION FOR ADVICE OF CHARGE**

(71) Applicant: ALCATEL LUCENT, 92100 Boulogne-Billancourt (FR)
(72) Inventor: KASHYAP, Gaurav, 122016 Gurgaon (IN); BHATT, Subha, 122016 Gurgaon (IN); ANSARI, Asif, 124507 Bahadurgarh Haryana (IN)
(74) Representative: Mouney, Jérôme

(57) **Abstract**

For the management of tariff information in case of multiple destinations for an advice of charge service during the usage of a service associated with a communication between a communication device (CD) and said multiple destinations within a telecommunications network (TN), a server included within the telecommunications network:
estimates a tariff of the communication for each destination contained in a request received from a network element capable of generating charging events while monitoring the communication's use of the network's resources, said request containing addresses of the multiple destinations and containing a query for advice of charge service,
generates a reply containing an advice of charge information indicating different tariffs respectively associated with different destinations, and
sends the reply to the network element

## Description

### FIELD OF THE INVENTION

The present invention pertains to the management of information on conditions for delivering a service associated with a current communication established by a user terminal. More specifically, the present invention pertains to the management of tariff information in case of multiple destinations.

### BACKGROUND

The document 3GPP TS32.299 defines a Ro interface for real-time charging between a Charging Trigger Function (CTF) module and an Online Charging System (OCS) module.

Trigger and re-authorization functions define events that the CTF module must monitor while delivering a service. Whenever such an event takes place-for example, a change of location or a change in quality of service-the CTF module must trigger a reauthorization for the OCS module in order to adapt the service's charging.

The OCS module monitors the delivery of a service by means of a Diameter session, during which charging is performed by reserving units. If, during the delivery of a service, a change takes place that may influence rates, the CTF module must produce a message to reserve new units with updated conditions.

The document 3GPP TS32.280 defines a mechanism to include an estimation of tariff information for the requested service within an advice of charge message. This estimation can be presented to the user in real-time.

Currently, there is no solution to provide tariff information in case of multiple destinations for an advice of charge type of request.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for the management of tariff information in case of multiple destinations for an advice of charge service during the usage of a service associated with a communication between a communication device and said multiple destinations within a telecommunications network, comprising the following steps in a server included within the telecommunications network:
after reception of a request coming from a network element capable of generating charging events while monitoring the communication's use of the network's resources, said request containing addresses of the multiple destinations and an identifier of the service related to the communication and containing a query for advice of charge service,
estimating a tariff of the communication for each destination contained in the request, by means of said addresses and said identifier of the service,
generating a reply containing an advice of charge information indicating different tariffs respectively associated with different destinations, and
sending the reply to the network element.

Advantageously, the invention offers an additional feature to the telecommunication network, allowing multiple destination tariffs information delivery to a user terminal when multiple destinations are detected by online or offline charging system. In other words, a network element such as a Credit Control Client is able to support extracting information of multiple destinations and sending information to user terminal and a server such as a Credit Control Server is able to report multiple destination tariffs information/estimation to the network element.

In accordance with one embodiment, the network element sends a report to the communication device, the report containing the advice of charge information.

In accordance with one embodiment, the network element sends an update request to the server, the update request containing the units consumed.

In accordance with one embodiment, the server rates units on different tariffs, according to the consumed units associated with each destination.

In accordance with one embodiment, the request is a dedicated advice of charge request.

In accordance with one embodiment, the request contains an Attribute-Value Pair (AVP) of AoC-Request-Type.

In accordance with one embodiment, the server looks up tariffs associated with destinations into a predefined table associated with the service.

The invention relates also to a server for managing multiple tariff switches for an advice of charge service during the usage of a service associated with a current communication established by a communication device within a telecommunications network, the server comprising:
means for estimating a tariff of the communication for each destination contained in a request received from a network element capable of generating charging events while monitoring the communication's use of the network's resources, said request containing addresses of the multiple destinations and an identifier of the service related to the communication and containing a query for advice of charge service, wherein said tariff is estimated by means of said addresses and said identifier of the service,
means for generating a reply containing an advice of charge information indicating different tariffs respectively associated with different destinations, and
means for sending the reply to the network element.

The invention also pertains to a computer program capable of being implemented within a server, said program comprising instructions which, when the program is executed within said server, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for the management of tariff information in case of multiple destinations for advice of charge service; and
- FIG. 2 is an algorithm of a method for the management of tariff information in case of multiple destinations for advice of charge service according to one embodiment of the invention.

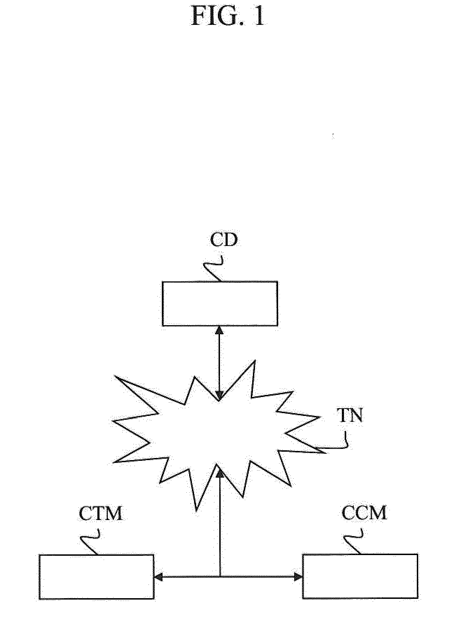

With reference to FIG. 1, a communication system according to the invention comprises a telecommunications network TN, a communication device CD, a charging trigger module CTM and a charging control module CCM.

In the remainder of the description, the term module may designate a device, a software program, or a combination of computer hardware and software, configured to execute at least one particular task.

The telecommunication network TN may be a wired or wireless network, or a combination of wired and wireless networks.

The communication device CD is capable of establishing a communication within a telecommunications network TN, for example with another user terminal. A communication device CD may, for instance, be a landline or mobile telephone, an electronic telecommunication device or object that is personal to the user and which may be a personal digital assistant (PDA) or a smartphone, capable of being connected to an access terminal of a public wireless local area network (WLAN), or a wireless local area network that complies with one of the 802.1x standards, or a medium-range network using the Worldwide Interoperability for Microwave Access (WiMAX) protocol.

The charging trigger module CTM and the charging control module CCM communicate with one other over the telecommunications network TN, of the Internet type. In one variant, the charging trigger module CTM and the charging control module CCM communicate with one other over a local area network or over specialized lines through the network TN.

The charging trigger module CTM and the charging control module CCM may respectively be implemented in different servers, such as application servers.

A particular functionality of the charging trigger module CTM is to ensure that the service is delivered with the assistance of service units authorized by the charging control module CCM, which it regularly triggers in order to do so.

A particular functionality of the charging control module CCM is to determine an authorized number of service units for delivering the service, and to transmit a reply containing that authorized number of service units to the charging trigger module CTM. To that end, the module CCM may determine a rate associated with the account or sub-account to be used to charge the service, and may determine the authorized number of service units based on the rate and on the number of service units remaining in the account or sub-account.

Another particular functionality of the charging control module CCM is to determine an estimation of tariff information for a requested service and to send said estimation of tariff information back to the charging trigger module CTM via an advice of charge message that can be then presented to user in real-time.

Furthermore, whenever the charging control module CCM receives a number of units that are actually being used for the service, transmitted by the charging trigger module CTM, the module CCM decrements the corresponding account or sub-account.

According to one embodiment of the invention that will be referred to throughout the remainder of the description, the telecommunication network TN is a packet network connected to an IP Multimedia Subsystem (IMS) network.

It is assumed that the user terminal is capable of communicating through the telecommunications network TN connected to the IMS network, for example with another terminal, using communication compliant with the Session Initiation Protocol (SIP). For example, the communication corresponds to an exchange of multimedia flows regarding audio and/or video content, or instant messages. The communication established by the user terminal may also be a communication with a service server, such as a web server or multimedia content server.

The user's profile, containing the services to which that user has subscribed, is saved in a Home Subscriber Server (HSS) server that manages a database particularly containing users' identities, registration information, access parameters, and information needed to invoke the services that the users have subscribed to. In one implementation, the HSS server interacts with other entities of the IMS network using the Diameter protocol.

The control of a communication initiated by the terminal is performed within the IMS network, particularly by three Call State Control Function (CSCF) control entities: the entities Proxy CSCF (P-CSCF), Interrogating CSCF (I-CSCF), and Serving-CSCF (S-CSCF).

The entity P-CSCF is the first point of contact in the IMS network, and its address is discovered by the user terminal when a Packet Data Protocol (PDP) context is activated to exchange SIP messages.

The entity I-CSCF communicates with the entity P-CSCF and with the HSS server to assign the entity S-CSCF to the user based on the user's profile saved in the HSS server.

The entity S-CSCF is in charge of controlling the communication session established by the user terminal and invoking the services to which the user is subscribed.

The charging trigger module CTM queries the charging control module CCM for units to be consumed during the delivery of a service or for an advice of charge service indicating an estimation of tariff information for a requested service. The charging trigger module CTM and the charging control module CCM communicate with one another, for example, by means of the Diameter Ro protocol.

The charging control module CCM may be included in an online charging system (OCS), which may be a server located elsewhere in the IMS network.

The charging trigger module CTM may be included in a network element, such as an application server or Gateway GPRS Support Node (GGSN) gateway. For example, the charging trigger module CTM implements a Charging Trigger Function (CTF), which is a central point for collecting relevant information about charging events in the network and monitoring the communication's use of network resources.

The network element, in which is included the charging trigger module CTM, is capable of generating charging events while monitoring the communication's use of network resources.

The charging control module CCM determines the present price of a current communication based on a set of parameters and the values of those parameters associated with the price. The parameters are related to the communication, and may partly correspond to context data provided by the network or be based on context data sets.

According to one embodiment, the charging control module CCM is configured to rate requested units with different tariffs for different destinations. When the charging trigger module CTM requests units, the charging control module CCM checks the tariffs available for different destinations for different services.

The charging control module CCM is able to inform the charging trigger module CTM of all possible tariffs depending on the destination and rates the units in accordance with the selected destination

For example, the charging control module CCM has configured different tariff ratings according to different destinations for the two different services SMS and MMS:
- SMS service
   Check_CUG_SMS
      → SMS_TARIFF_FREE
      Check_LOCAL_SMS
      → SMS_LOCAL_TARIFF
      Check_INTERNATIONAL_SMS
      → SMS_ INTERNATIONAL_FREE
- MMS service
   Check_CUG_MMS
      → MMS_TARIFF_FREE
      Check_LOCAL_MMS
      → MMS_LOCAL_TARIFF
      Check_INTERNATIONAL_MMS
      → MMS_INTERNATIONAL_FREE

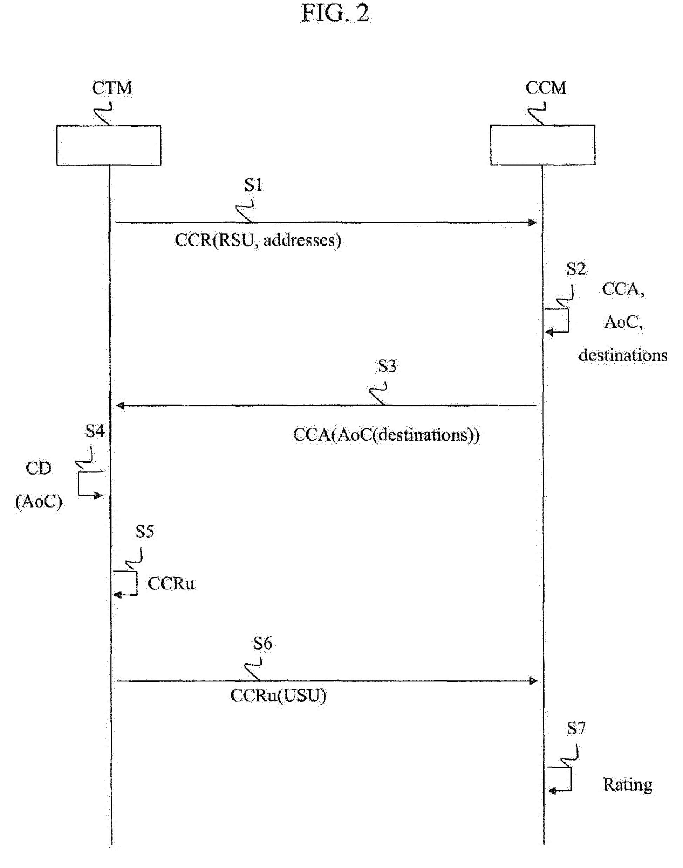

With reference to FIG. 2, a method for the management of tariff information in case of multiple destinations for advice of charge service according to one embodiment of the invention comprises steps S1 to S7 executed within the communication system.

The method is described below with reference to a telecommunication network TN connected to an IMS network as an example.

In step S1, the communication device CD establishes a communication within the network TN, for example with a conference server, or sends a message to multiple destinations.

The terminal transmits a communication session initiation message to the charging trigger module CTM. This message is, for example, an "INVITE" message, and particularly contains the addresses of the multiple destinations. The charging trigger module CTM identifies the user's profile and the type of service related to the communication. The module CTM transmits a Credit Control Request (CCR) to the charging control module CCM to request authorization to use the service related to the communication established by the communication device CD.

The request CCR further contains an identifier of the service, a number of requested service units (RSUs) and the addresses of the destinations. The service units may be related to monetary units or telephone credit units. The request CCR further comprises a query for advice of charge service. The request CCR is thus a dedicated advice of charge request.

In step S2, the charging control module CCM extracts the identifier of the service and the addresses of the multiple destinations from the request CCR. The charging control module CCM looks up tariffs associated with destinations into a predefined table associated with the service.

The charging control module CCM estimates the tariff of the communication for each destination contained in the request, based on a set of parameter values related to the communication and the type of service by means of the identifier of the service. The charging control module CCM verifies that the service can be delivered based on the user's account, meaning if the account contains enough units to authorize the delivery of the service.

The request CCR contains further information which can be used to determine the tariff, such as location of a calling or called party, device used by the calling party, a rating group information.

The charging control module CCM generates a reply Credit Control Answer (CCA) containing an advice of charge AoC information indicating multiple instances of tariff information associated with the different destinations.

In step S3, the charging control module CCM transmits the reply CCA to the charging trigger module CTM, the reply containing the identifier of the service and the advice of charge AoC information indicating the different estimated tariffs respectively associated with the different destinations.

In step S4, the charging trigger module CTM transmits the estimated tariff information to the communication device CD that can display the information for the user. The user can then decide if the communication can continue.

In step S5, if the user agrees on the estimated tariff, the session continue and the charging trigger module CTM monitors the consumption of the granted units. An event is triggers the charging trigger module CTM to generate an update request CCRu to report back to the charging control module CCM.

For instance, the event can correspond to the consumption of all the granted units are consumed or the end of the communication established by the communication device CD.

According to RFC 4006, an update request contains credit-control information for an existing credit-control session and can be sent every time a credit-control re-authorization is needed at the expiry of the allocated quota or validity time.

In step S6, the charging trigger module CTM sends the update request CCRu to the charging control module CCM.

The charging trigger module CTM sends an update request CCRu to the charging control module CCM. The update request CCRu contains the identifier IdS of the service and the units consumed that can be called also Used Service Unit USU.

In step S7, the charging control module CCM receives and analyses the update request CCRu and rates units on different tariffs, according to the consumed units associated with each destination.

In a first example, the communication device sends grouped SMS to a number of a Closed User Group, to a local number and to an international number. The module CTM transmits a Credit Control Request (CCR) to the charging control module CCM, the request CCR containing the following information:

| | |
|---|---|
| <CCR> ::= < Diameter Header: 272, REQ, PXY > | |
| | ... |
| | [ Subscription-Id ] |
| | [ AoC-Request-Type ] |
| | [ Service-Information ] |
| | [AVP] |
| | ... |
| | |
| Service- Information :: = < AVP Header: 873> | |
| | ... |
| | [ Subscription-Id ] |
| | [ AoC-Information ] |
| | [ SMS-Information ] |
| | ... |
| | |
| SMS-Information :: = < AVP Header: 2000> | |
| | [ SMS-Nade ] |
| | [ Client-Address ] |
| | [ Originator-SCCP-Address ] |
| | [ SMSC-Address ] |
| | [ Data-Coding-Scheme ] |
| | [ SM-Discharge-Time ] |
| | [ SM-Message-Type ] |
| | [ Originator-Interface ] |
| | [ SM-Protocol-ID ] |
| | [ Reply-Path-Requested ] |
| | [ SM-Status ] |
| | [ SM-User-Data-Header ] |
| | [ Number-Of-Messages-Sent ] |
| | [ Recipient-Info ] |
| | [ Originator-Received-Address ] |
| | [ SM-Service-Type ] |
| | |
| Recipient-Info :: = < AVP Header: 2026 > | |
| | [ Destination-Interface ] |
| | [ Recipient-Address ] |
| | [ Recipient-Received-Address ] |
| | [ Recipient-SCCP-Address ] |
| | [ SM-Protocol-ID ] |

The charging control module CCM identifies the SMS service and traverses a tree modeling the configuration of tariff ratings according to different destinations.

The charging control module CCM transmits a Credit Control Answer (CCA) to the charging trigger module CTM, the reply CCA containing the following information:
CCA
   ...
   Service-Information
      AoC-Information
         [ Recipient-Address ] → CUG Destination info
            [ AoC-Cost-Information ] CUG Destination cost
            [ Tariff-Information ] → SMS_TARIFF_FREE
         [ Recipient-Address ] → LOCAL Destination info
            [ AoC-Cost-Information ] → LOCAL Destination cost
            [ Tariff-Information ] → SMS_LOCAL_TARIFF
         [ Recipient-Address ] → INTERNATIONAL Destination info
            [ AoC-Cost-Information ] → INTERNATIONAL Destination cost
            [ Tariff-Information ] → SMS_INTERNATIONAL_TARIFF
In a second example, the communication device creates an IMS conference call using SIP URI-list.

The module CTM transmits a Credit Control Request (CCR) to the charging control module CCM, the request CCR containing the following information:

| | |
|---|---|
| <CCR>::= <Diameter Header: 272, REQ, PXY> | |
| | ... |
| | [Subscription-Id] |
| | [AoC-Request-Type] |
| | [Service-Information] |
| | [AVP] |
| | ... |
| | |
| Service-Information::= <AVP Header:873> | |
| | ... |
| | [Subscription-Id ] |
| | [AoC-Information ] |
| | [IMS-Information ] |
| | |
| IMS-Information :: = < AVP Header: 876> | |
| | ... |
| | [Calling-Party-Address ] |
| | [Application-Server-Information ] |
| | [IMS-Charging-Identifier ] |
| | |
| Application-Server-Information::= <AVP Header: 850 > | |
| | [Application-Server ] |
| | [Application-Provided-Called-Party-Address ] |

The charging control module CCM identifies the IMS conference call service and traverses a tree modeling the configuration of tariff ratings according to different destinations.

The charging control module CCM transmits a Credit Control Answer (CCA) to the charging trigger module CTM, the reply CCA containing the following information:
CCA
   ...
   Service-Information
      AoC-Information
         //Information of called party 1
            [Called-Party-Address ]
            [ AoC-Cost-Information ]
            [ Tariff-Information ]
         //Information of called party 2
            [Called-Party-Address ]
            [ AoC-Cost-Information ]
            [ Tariff-Information ]
         //Information of called party 3
            [Called-Party-Address ]
            [ AoC-Cost-Information ]
            [ Tariff-information ]

The AoC-information has the following implementation ABNF (Augmented Backus-Naur Form) grammar:

| | |
|---|---|
| AoC-information:: = < AVP Header: 2054 > | |
| | *[ Recipient-Address] or *[ Called-Party-Address ] |
| | *[ AoC-Cost-Information ] |
| | *[ Tariff-Information ] |
| | [ AoC-Subscription-Information ] |

Wherein *AVP indicates that multiple occurrences of an AVP is possible, and wherein:

| | |
|---|---|
| AoC-Cost-Information:: = < AVP Header: 2053 > | |
| | [ Accumulated-Cost ] |
| | [ Incremental-Cost ] |
| | [ Currency-Code ] |
| | |
| Tariff-Information :: = < AVP Header: 2060 > | |
| | { Current-Tariff } |
| | [ Tariff-Time-Change ] |
| | [ Next-Tariff ] |

The invention described here relates to a method and a server for the management of tariff information in case of multiple destinations for advice of charge service. According to one implementation of the invention, the steps of the invention are determined by the instructions of a computer program incorporated into the server. The program comprises program instructions which, when said program is loaded and executed within the server, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for the management of tariff information in case of multiple destinations for an advice of charge service during the usage of a service associated with a communication between a communication device (CD) and said multiple destinations within a telecommunications network (TN), comprising the following steps in a server included within the telecommunications network:
after reception of a request (CCR) coming from a network element capable of generating charging events while monitoring the communication's use of the network's resources, said request containing addresses of the multiple destinations and an identifier of the service related to the communication and containing a query for advice of charge service,
estimating (S2) a tariff of the communication for each destination contained in the request, by means of said addresses and said identifier of the service,
generating (S2) a reply (CCA) containing an advice of charge information indicating different tariffs respectively associated with different destinations, and
sending (S3) the reply (CCA) to the network element.

2. A method according to claim 1, whereby the network element sends a report to the communication device (CD), the report containing the advice of charge information.

3. A method according to claim 1 or 2, whereby the network element sends an update request (CCRu) to the server, the update request (CCRu) containing the units consumed.

4. A method according to claim 3, whereby the server rates units on different tariffs, according to the consumed units associated with each destination.

5. A method according to any of the claim 1 to 4, wherein the request (CCR) is a dedicated advice of charge request.

6. A method according to any of the claim 1 to 5, wherein the request (CCR) contains an Attribute-Value Pair (AVP) of AoC-Request-Type.

7. A method according to any of the claim 1 to 6, wherein the server looks up tariffs associated with destinations into a predefined table associated with the service.

8. A server for managing multiple tariff switches for an advice of charge service during the usage of a service associated with a current communication established by a communication device (CD) within a telecommunications network (TN), the server comprising:
means (CCM) for estimating a tariff of the communication for each destination contained in a request received from a network element capable of generating charging events while monitoring the communication's use of the network's resources, said request containing addresses of the multiple destinations and an identifier of the service related to the communication and containing a query for advice of charge service, wherein said tariff is estimated by means of said addresses and said identifier of the service,
means (CCM) for generating a reply (CCA) containing an advice of charge information indicating different tariffs respectively associated with different destinations, and
means (CCM) for sending the reply (CCA) to the network element.

9. A computer program capable of being implemented within a server for the management of tariff information in case of multiple destinations for an advice of charge service during the usage of a service associated with a communication between a communication device (CD) and said multiple destinations within a telecommunications network (TN), said program comprising instructions which, when the program is loaded and executed within said server, carry out the following steps:
after reception of a request (CCR) coming from a network element capable of generating charging events while monitoring the communication's use of the network's resources, said request containing addresses of the multiple destinations and an identifier of the service related to the communication and containing a query for advice of charge service,
estimating (S2) a tariff of the communication for each destination contained in the request, by means of said addresses and said identifier of the service,
generating (S2) a reply (CCA) containing an advice of charge information indicating different tariffs respectively associated with different destinations, and
sending (S3) the reply (CCA) to the network element.
